# EUROPEAN PATENT SPECIFICATION

(11) **EP 4 657 903 B1**
(45) Date of publication and mention of the grant of the patent: **11.11.2026**
(21) Application number: 24178920.5
(22) Date of filing: 29.05.2024
(51) Int. Cl.: H04W 4/90, H04W 76/50, H04W 4/40, G08G 1/00

(54) **METHOD FOR CONDUCTING AN EMERGENCY COMMUNICATION INVOLVING BOTH AN IN-VEHICLE SYSTEM OF A VEHICLE AND AT LEAST ONE USER EQUIPMENT ASSOCIATED WITH THE IN-VEHICLE SYSTEM, IN-VEHICLE SYSTEM, USER EQUIPMENT, SYSTEM COMPRISING AN IN-VEHICLE SYSTEM AND AT LEAST ONE USER EQUIPMENT, PROGRAM AND COMPUTER PROGRAM PRODUCT**
VERFAHREN ZUR NOTFALLKOMMUNIKATION ZWISCHEN FAHRZEUG UND BENUTZERGERÄT
SYSTÈME D'UTILISATEUR, SYSTÈME D'UTILISATEUR, SYSTÈME COMPRENANT UN SYSTÈME EMBARQUÉ ET AU MOINS UN ÉQUIPEMENT UTILISATEUR

(43) Date of publication of application: 03.12.2025
(73) Proprietor: Deutsche Telekom AG, 53113 Bonn (DE)
(72) Inventor: BÜCHTER, Martin, 53840 Troisdorf (DE); LAUSTER, Reinhard, 3100 St. Pölten (AT)
(74) Representative: Schwöbel, Thilo K.

(56) References cited:
- EP-A1- 1 850 530
- US-A1- 2012 225 634
- US-A1- 2023 413 381
- US-B2- 8 818 325
- CEN: "Intelligent transport systems - ECall optional additional data - Linked mobile phone number data concept", TECHNICAL SPECIFICATION. TS CEN/TS 17363:2019 - BARVE, 30 September 2019 (2019-09-30), pages 1 - 22, XP093208651, Retrieved from the Internet <URL:https://standards.iteh.ai/catalog/standards/sist/18691abf-ed89-4b93-9dbe-c5b463f013c9/sist-ts-cen-ts-17363-2019>

## Description

### BACKGROUND

The present invention relates a method for conducting an emergency communication involving both an in-vehicle system of a vehicle and at least one user equipment associated with the in-vehicle system, wherein the in-vehicle system and the user equipment are involved for conducting the emergency communication as a first and a second device, respectively, wherein the first device has or is assigned to at least one piece of identifier information.

Furthermore, the present invention relates to an in-vehicle system for conducting an emergency communication involving both the in-vehicle system of a vehicle and at least one user equipment as a first and a second device, respectively, wherein the first device has or is assigned to at least one piece of identifier information.

Furthermore, the present invention relates to a user equipment for conducting an emergency communication involving both an in-vehicle system of a vehicle and at least the user equipment, wherein the in-vehicle system and the user equipment are involved for conducting the emergency communication as a first and a second device, respectively, wherein the first device has or is assigned to at least one piece of identifier information.

Additionally, the present invention relates to a system comprising an in-vehicle system of a vehicle and at least one user equipment for conducting an emergency communication involving both the in-vehicle system and at least the user equipment as a first and a second device, respectively, wherein the first device has or is assigned to at least one piece of identifier information.

Furthermore, the present invention relates to a program and to a computer program product for conducting an emergency communication according to the inventive method.

eCall is an automatic or manual emergency call system that is implemented in vehicles and typically conducted by an in-vehicle system of the respective vehicle. In the event of an accident, an emergency call is triggered and the location typically generated, or determined, by means of the in-vehicle system using a global navigation satellite system (GNSS) as well as other data relevant to the accident is transmitted to the public safety answering point or private safety answering point.

However, there exists the problem of so-called "silent" eCalls which are or correspond to eCalls (i.e. emergency calls) in which the call appears to be working fine and, also, the corresponding eCall data (i.e. the minimum set of data, MSD) is actually received (by the public or private safety answering point). However, when the operator (of the public or private safety answering point) attempts to contact the vehicle occupants, there is no response, e.g. due to the in-vehicle system having failed or having an error, and/or due to the vehicle occupants being unable to respond or to speak (e.g. due to death and/or unconsciousness) and/or due to the vehicle occupants having left the vehicle (intentionally or unintentionally) e.g. by moving to a safe(r) location, e.g. behind a guardrail or far away from the road which is often recommended by both an emergency response center and roadside assistance services; a majority of cases where the occupants of the vehicle are not able to be reached (by the public or private safety answering point) correspond to such situations where the occupants have left the vehicle.

However, the dispatcher of the rescue services, i.e. the public or private safety answering point or call center (in the event of a real emergency) must act; in this case, reliable communication between rescue workers/dispatchers and people in need of help cannot be guaranteed by an eCall emergency communication alone, i.e. that exclusively involves the in-vehicle system. The current situation restricts the emergency answering points from responding to a real emergency situation, and is a waste of resources and consequently reduces the chances that people who are actually in distress are getting help.

In document US 2012/0225634 A1 a telematics system for vehicles that detects mobile devices via Bluetooth, associates them with occupants, and transmits profile information (e.g., age, gender, medical data) to a service provider in the event of a crash is discloses. The system stores identification data from mobile phones and may forward such data during emergency calls. However, only a one-sided system where the in-vehicle system alone initiates and conducts the emergency communication is disclosed, while mobile devices are passive sources of data.

In document DIN CEN/TS 17363:2019 an optional extension to the European eCall system is described, allowing a vehicle to transmit the linked mobile phone number of a paired user device during an emergency call, provided user consent was previously given. The purpose is to enable emergency services to attempt a callback if voice communication with the vehicle fails. However, the document presents a system where the in-vehicle system alone initiates and handles the emergency communication, while the mobile device plays no active role.

In document EP 1 850 530 A1 a system is disclosed in which a vehicle-mounted transceiver detects a nearby mobile phone via Bluetooth and, upon detecting a vehicular emergency, triggers the mobile phone to automatically send a TTY (text telephony) message to a public safety answering point (PSAP). The mobile phone is used as a communication proxy, while the vehicle itself does not engage in the communication beyond initiating it.

### SUMMARY

An object of the present invention is to provide an effective and simple solution for providing a general applicability for conducting an emergency communication involving both an in-vehicle system and at least a user equipment (these two devices as a first and a second device, respectively). A further object of the present invention is to provide a corresponding in-vehicle system, a corresponding user equipment, a corresponding system comprising an in-vehicle system and at least one user equipment, and a corresponding program and computer-readable medium.

The object of the present invention is achieved by a method according to claim 1.

According to the present invention, it is advantageously possible that dangerous and hazardous situations that require emergency communications are able to be improved, especially by means of providing a higher degree of flexibility when conducting such emergency communication, and especially in view of a reduction of silent emergency communications.

According to the present invention, a method for conducting an emergency communication is proposed involving both an in-vehicle system of a vehicle and at least one user equipment associated with the in-vehicle system, wherein the in-vehicle system and the user equipment are involved for conducting the emergency communication as a first and a second device, respectively, wherein the first device has or is assigned to at least one piece of identifier information,
wherein the first and second device are configured to be paired with one another and/or
the first device to be registered with the second device in a manner such that the at least one piece of identifier information is transmitted to or, at least, stored in the second device,
wherein, in order to conduct the emergency communication involving both the first and the second device, the method comprises the following steps:
   -- in a first step, the first device is paired with and/or registered to the second device resulting in storing the at least one piece of identifier information in the second device,
   -- in a second step, subsequent to the first step, and in case of a situation resulting in the second device being triggered to perform an emergency communication to either a public safety answering point or to a private safety answering point, the at least one identifier information of or associated or assigned to the first device is transmitted, by the second device and as part of the emergency communication, to the public safety answering point or to the private safety answering point.

According to at least one embodiment of the present invention, it is advantageously possible and preferred that the first device is the user equipment and the second device is the in-vehicle system, wherein the at least one piece of identifier information corresponds to, or comprises, an identifier information of the user equipment.

Thereby, it is advantageously possible to realize and implement the inventive method in a comparatively simple and efficient manner.

According to at least one further embodiment of the present invention, it is furthermore advantageously possible and preferred that the first device is the in-vehicle system and the second device is the user equipment,
-- wherein the at least one piece of identifier information corresponds to, or comprises, at least the vehicle identity number
   and/or
-- wherein the in-vehicle system is configured to transmit, in case of initiating or conducting an emergency communication to a public or private safety answering point, a minimum set of data, wherein the at least one piece of identifier information corresponds to, or comprises, at least a part of the minimum set of data, especially at least the part of the minimum set of data that is not dependent on location and/or time.

Thereby, it is advantageously possible to realize and implement the inventive method in a comparatively simple and efficient manner.

According to a further embodiment of the present invention, it is still furthermore advantageously possible and preferred that the second device transmits, as part of the emergency communication, a minimal set of data to the public safety answering point or to the private safety answering point, wherein the at least one identifier information is transmitted, by the second device, either as part of such minimum set of data or together with or subsequent to the transmission of the minimum set of data to the public safety answering point or to the private safety answering point,
wherein especially, by means of pairing the first and second device with one another and/or by means of registering the first device with or to the second device, the first and second device form an eCall group,
wherein especially the user equipment is associated with an occupant of the vehicle,
wherein especially the eCall group comprises, in addition to the user equipment, a further user equipment, the further user equipment especially being associated to another occupant of the vehicle,
wherein especially the in-vehicle system comprises or is associated with an identity module, and the user equipment comprises a further identity module.

Thereby, it is advantageously possible to realize and implement the inventive method in a comparatively simple and efficient manner.

According to the present invention, it is furthermore advantageously possible and preferred that the first device is involved in the emergency communication that is initiated by the second device, during the second step, to the public safety answering point or to the private safety answering point, wherein especially the first device is locally involved in the emergency communication, wherein especially the second device establishes and maintains the emergency communication between the first device and the second device, and especially acts as a transmit in the emergency communication between, on the one hand, the public safety answering point or to the private safety answering point, and, on the other hand, the first device, wherein especially the first device is enabled to communicate directly with the public safety answering point or to the private safety answering point and exchanges information via the second device to the public safety answering point or to the private safety answering point.

It is thereby advantageously possible to realize and implement the inventive method in a comparatively simple and efficient manner.

According to the present invention, it is furthermore advantageously possible and preferred that - in addition to the second device initiating, during the second step, the emergency communication to the public safety answering point or to the private safety answering point - the first device is triggered, by the second device, to initiate an additional emergency communication to the public safety answering point or to the private safety answering point or to a further public or private safety answering point,
wherein especially the additional emergency communication corresponds to an advanced mobile location, AML, emergency communication or to an eCall emergency communication,
wherein especially the additional emergency communication is initiated subsequently to the emergency communication of the second device, and especially subsequently to the second device transmitting the at least one identifier information to the public safety answering point or to the private safety answering point,
wherein especially the first device transmits, as part of or during the additional emergency communication, its exact location to the public or private safety answering point or to the further public or private safety answering point,
wherein especially the public or private safety answering point and/or the further public or private safety answering point relates the emergency communication initiated by the second device and the additional emergency communication initiated by the first device to one another by means of the transmitted at least one identifier information.

It is thereby advantageously possible to realize and implement the inventive method in a comparatively simple and efficient manner.

Additionally according to the present invention, it is furthermore advantageously possible and preferred that - in addition to the second device initiating, during the second step, the emergency communication to the public safety answering point or to the private safety answering point - the first device receives an additional emergency communication initiated by the public or private safety answering point or by the further public or private safety answering point,
wherein especially the public or private safety answering point or the further public or private safety answering point is able to initiate the additional emergency communication based on the transmitted at least one identifier information received during the second step.

It is thereby advantageously possible to realize and implement the inventive method in a comparatively simple and efficient manner.

Furthermore according to the present invention, it is advantageously possible and preferred that the in-vehicle system at least comprises an eCall module and an in-vehicle-communication module or pairing module, wherein especially the in-vehicle system also comprises a memory module,
wherein the eCall module is configured to be triggered, especially in case of an emergency situation, to initiate an emergency communication to either a public safety answering point or to a private safety answering point,
wherein the in-vehicle-communication or pairing module is configured such as to pair the user equipment to the in-vehicle system or such as to register the user equipment to the in-vehicle system,
wherein especially, the in-vehicle system, especially the eCall module thereof, comprises an identity module having a secure element, and wherein especially the user equipment comprises a further identity module having a further secure element.

It is thereby advantageously possible to realize and implement the inventive method in a comparatively simple and efficient manner.

Furthermore according to the present invention, it is advantageously possible and preferred that the identifier information corresponds to a phone number, especially a mobile phone number, of the user equipment or to another identifier of the user equipment, e.g. an identifier information corresponding to a private or public identifier, especially a phone number (MSISDN), SIP-URI, IMSI, IMEI or the like.

Furthermore, the present invention relates to a user equipment according to claim 7.

Furthermore, the present invention relates to a system comprising an in-vehicle system of a vehicle and at least one user equipment according to claim 8.

Additionally, the present invention relates to a program according to claim 9.

Still additionally, the present invention relates to a computer-readable medium according to claim 10.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

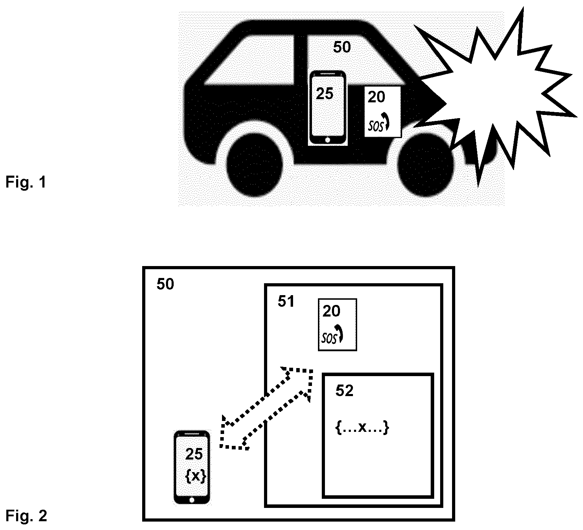

**Figure 1** schematically illustrates a vehicle comprising an in-vehicle system in a situation where the in-vehicle system is triggered to perform an emergency communication to either a public safety answering point or to a private safety answering point, wherein at least one user equipment is associated with the in-vehicle system, especially by means of being associated with an occupant of the vehicle, and wherein the in-vehicle system also involves the user equipment when conducting the emergency communication.
**Figure 2** schematically illustrates preparatory efforts in view of performing an emergency communication - by the in-vehicle system and to a public or private safety answering point - involving the user equipment.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a vehicle 50 is schematically illustrated comprising an in-vehicle system 20 in a situation where the in-vehicle system 20 is triggered to perform an emergency communication to either a public safety answering point or to a private safety answering point (neither of which is shown in Figure 1), wherein at least one user equipment 25 is associated with the in-vehicle system 20, especially by means of being associated with an occupant of the vehicle 50, and wherein the in-vehicle system 20 also involves the user equipment 25 when conducting the emergency communication. This understanding of Figure 1 corresponds to a first interpretation or a first embodiment (or first group of embodiments) of the present invention.

According to another interpretation, Figure 1 shows a vehicle 50 comprising an in-vehicle system 20 and a user equipment 25, wherein the in-vehicle system 20 is associated with a user equipment 25 and the user equipment 25 is, typically, associated with an occupant of the vehicle 50; furthermore, Figure 1 can be interpreted as showing a situation where the user equipment 25 (instead of the in-vehicle system 20) is triggered to perform an emergency communication to either a public safety answering point or to a private safety answering point, wherein, however, the in-vehicle system 20 (being associated to the user equipment 25) is also involved when conducting the emergency communication. Such an understanding of Figure 1 corresponds to a second interpretation or a second embodiment (or second group of embodiments) of the present invention.

In Figure 2, the preparatory efforts in view of performing an emergency communication - by the in-vehicle system 20 and to a public or private safety answering point involving the user equipment 25, or, alternatively, by the user equipment 25 to a public or private safety answering point involving the in-vehicle system 20. Figure 2 schematically shows the vehicle 50, comprising both the user equipment 25 (typically associated with an occupant of the vehicle 50) and the in-vehicle system 20, wherein the in-vehicle system (20) at least comprises an eCall module 51 (or vice versa, i.e. the eCall module 51 comprises the in-vehicle system 20) and an in-vehicle-communication module or pairing module, wherein especially the in-vehicle system 20 and/or the eCall module 51 also comprises a memory module 52.
According to the first embodiment or group of embodiments (i.e. where it is the in-vehicle system 20 that is the device (primarily) performing (or being triggered to perform) the emergency communication to either a public safety answering point or a private safety answering point), the in-vehicle system 20 is able to involve the user equipment 25 only in case that the in-vehicle system 20 is provided with at least one piece of identifier information of the user equipment 25, this being schematically illustrated, in Figure 2, by means of "{x}" or "{...x...}". This means that, in this case, the at least one piece of identifier information is transmitted to or, at least, stored in the in-vehicle system 20; hence, at least at a certain point in time, there needs to be a communication between the user equipment 25 and the in-vehicle system 20, such as, e.g., a pairing process or the like.
Alternatively, according to the second embodiment or group of embodiments (i.e. where it is the user equipment 25 that is the device (primarily) performing (or being triggered to perform) the emergency communication to either a public safety answering point or a private safety answering point), the user equipment 25 is able to involve the in-vehicle system 20 only in case that the user equipment 25 is provided with at least one piece of identifier information of the in-vehicle system 20, this also being schematically illustrated, in Figure 2, by means of "{x}" or "{...x...}". This means that, in this case, the at least one piece of identifier information is transmitted to or, at least, stored in the user equipment 25; hence, at least at a certain point in time, there needs to be a communication between the in-vehicle system 20 and the user equipment 25, such as, e.g., a pairing process or the like.

Thus, according to the present invention, the in-vehicle system 20 and the user equipment 25 are involved for conducting the emergency communication as a first and a second device, respectively. The first device has or is assigned to at least one piece of identifier information, and both the first device and the second device are configured to be paired with one another and/or the first device to be registered with the second device in a manner such that the at least one piece of identifier information (of, or associated with the first device) is transmitted to or, at least, stored in the second device.

According to the present invention - in order to conduct the emergency communication involving both the first and the second device - the method comprises the following steps:
-- in a first step, the first device is paired with and/or registered to the second device resulting in storing the at least one piece of identifier information in the second device,
-- in a second step, subsequent to the first step, and in case of a situation resulting in the second device being triggered to perform an emergency communication to either a public safety answering point or to a private safety answering point, the at least one identifier information of or associated or assigned to the first device is transmitted, by the second device and as part of the emergency communication, to the public safety answering point or to the private safety answering point.

Especially according to the present invention (i.e. according to a preferred embodiment of the present invention, of either the first or the second group of embodiments), the first step is a preparatory step and occurs prior to (and is especially completed prior to) the situation or incident that leads to triggering the emergency communication of the second step. In case of an emergency situation, the emergency communication (or emergency call) is initiated, by the user equipment 25 (first embodiment or group of embodiments according to the present invention) or by the in-vehicle system 20 (second embodiment or group of embodiments according to the present invention) and the at least one identifier information of or associated or assigned to the first device is transmitted, by the second device and as part of the emergency communication, to the public safety answering point or to the private safety answering point.
However - according to a further preferred embodiment of the present invention, of either the first or the second group of embodiments -, it might also be contemplated that the first and second steps occur - at least partly - simultaneously, i.e. in case of an emergency situation, and, thus, in case that the emergency communication (or emergency call) should be initiated (by the user equipment 25 (first embodiment or group of embodiments according to the present invention) or by the in-vehicle system 20 (second embodiment or group of embodiments according to the present invention)), the first step is performed (i.e. the first device being paired with and/or registered to the second device resulting in storing the at least one piece of identifier information in the second device) while the situation or incident that leads to triggering the emergency communication has already occurred. Subsequently, the emergency communication (or emergency call) is initiated, by the user equipment 25 (first embodiment or group of embodiments according to the present invention) or by the in-vehicle system 20 (second embodiment or group of embodiments according to the present invention) and the at least one identifier information of or associated or assigned to the first device is transmitted, by the second device and as part of the emergency communication, to the public safety answering point or to the private safety answering point.

Hence, according to the present invention, it is advantageously possible to conduct an emergency communication involving both an in-vehicle system 20 of a vehicle 50 and at least one user equipment 25 associated with the in-vehicle system 50 (and also associated with an occupant of the vehicle). In the context of the present invention, 'involving' means that both the in-vehicle system 20 and the user equipment 25 are actively involved in the emergency communication. Hence, it is advantageously possible to communicate even though the circumstances of the emergency situation are such that the vehicle occupants are in a situation of not being able to communicate via the in-vehicle system (but they are able to communicate via the user equipment). Hence, the number (and, hence, the rate or proportion) of silent eCalls is able to be reduced.

According to the first group of embodiments (i.e. where the user equipment 25 is the first device and the in-vehicle system 20 is the second device) the at least one piece of identifier information corresponds to, or comprises, an identifier information of the user equipment 25, especially the international mobile subscriber identifier, IMSI, or the international mobile equipment identifier, IMEI, or a phone number, especially a mobile phone number, of the user equipment 25 or to another identifier of the user equipment 25.

According to the second group of embodiments (i.e. where the in-vehicle system 20 is the first device and the user equipment 25 is the second device) the at least one piece of identifier information corresponds to, or comprises, at least the vehicle identity number. Alternatively or cumulatively, the in-vehicle system 20 might also be configured such as to transmit, in case of initiating or conducting an emergency communication to a public or private safety answering point, a minimum set of data, wherein the at least one piece of identifier information corresponds to, or comprises, at least a part of the minimum set of data, especially at least the part of the minimum set of data that is not dependent on location and/or time.

In any case, it is preferred according to the present invention that the second device (i.e. the in-vehicle system 20 in case of the first group of embodiments, and the user equipment 25 in case of the second group of embodiments) transmits, as part of the emergency communication (especially in case that this emergency communication corresponds to an eCall), a minimal set of data to the public safety answering point or to the private safety answering point, wherein the at least one identifier information is transmitted, by the second device, either as part of such minimum set of data or together with or subsequent to the transmission of the minimum set of data to the public safety answering point or to the private safety answering point.

It is especially preferred according to the present invention, that - by means of pairing the first and second device with one another and/or by means of registering the first device with or to the second device - the first and second device form an eCall group.

Preferably, such an eCall group comprises, in addition to - besides the in-vehicle system 20 - the user equipment 25, a further user equipment, the further user equipment especially being associated to another occupant of the vehicle 50.

According to further preferred embodiments of the present invention, the involvement of the first device, in the emergency communication (that is initiated by the second device), is further specified:
According to one such scenario or possibility of such an involvement, the first device is locally involved in the emergency communication (that is initiated by the second device, during the second step, to the public safety answering point or to the private safety answering point); this means that the second device establishes and maintains the emergency communication between the first device and the second device, and especially acts as a transmit in the emergency communication between, on the one hand, the public safety answering point or to the private safety answering point, and, on the other hand, the first device, wherein especially the first device is enabled to communicate directly with the public safety answering point or to the private safety answering point and exchanges information via the second device to the public safety answering point or to the private safety answering point.

Hence, according to the first group of embodiments (i.e. where the user equipment 25 is the first device and the in-vehicle system 20 is the second device), such a local involvement of the user equipment 25 in the emergency communication (that is initiated, during the second step, by the in-vehicle system 20 to the public safety answering point or to the private safety answering point) means that the in-vehicle system 20 establishes and maintains the emergency communication between the user equipment 25 and the in-vehicle system 20, and especially acts as a transmit in the emergency communication between, on the one hand, the public safety answering point or to the private safety answering point, and, on the other hand, the user equipment 25, wherein especially the user equipment 25 is enabled to communicate directly with the public safety answering point or to the private safety answering point and exchanges information via the in-vehicle system 20 to the public safety answering point or to the private safety answering point.

Hence, according to the second group of embodiments (i.e. where the in-vehicle system 20 is the first device and the user equipment 25 is the second device), such a local involvement of the in-vehicle system 20 in the emergency communication (that is initiated, during the second step, by the user equipment 25 to the public safety answering point or to the private safety answering point) means that the user equipment 25 establishes and maintains the emergency communication between the in-vehicle system 20 and the user equipment 25, and especially acts as a transmit in the emergency communication between, on the one hand, the public safety answering point or to the private safety answering point, and, on the other hand, the in-vehicle system 20, wherein especially the in-vehicle system 20 is enabled to communicate directly with the public safety answering point or to the private safety answering point and exchanges information via the user equipment 25 to the public safety answering point or to the private safety answering point.

Furthermore, according to another such scenario or possibility of such an involvement, the first device is triggered, by the second device, to initiate an additional emergency communication to the public safety answering point or to the private safety answering point (or, even, to a further public or private safety answering point); this means that - in addition to the second device initiating, during the second step, the emergency communication to the public safety answering point or to the private safety answering point - the first device is triggered, by the second device, to initiate an additional emergency communication to the public safety answering point or to the private safety answering point (or to a further public or private safety answering point). Hence, the emergency communication of the first device to the public or private safety answering point or to the further public or further private safety answering point is independent from the emergency communication of the second device; this might lead to a more robust exchange of information regarding the emergency situation, and especially might further help to reduce silent eCalls.

Hence, according to the first group of embodiments (i.e. where the user equipment 25 is the first device and the in-vehicle system 20 is the second device), such an additional emergency communication to the public or private safety answering point or to the further public or further private safety answering point is triggered - in addition to the in-vehicle system 20 initiating, during the second step, the emergency communication to the public or private safety answering point - by the user equipment 25 (triggered by the in-vehicle system 20). Hence, the emergency communication of the user equipment 25 to the public or private safety answering point or to the further public or further private safety answering point is independent from the emergency communication of the in-vehicle system 20.

Hence, according to the second group of embodiments (i.e. where the in-vehicle system 20 is the first device and the user equipment 25 is the second device), such an additional emergency communication to the public or private safety answering point or to the further public or further private safety answering point is triggered - in addition to the user equipment 25 initiating, during the second step, the emergency communication to the public or private safety answering point - by the in-vehicle system 20 (triggered by the user equipment 25). Hence, the emergency communication of the in-vehicle system 20 to the public or private safety answering point or to the further public or further private safety answering point is independent from the emergency communication of the user equipment 25.

Preferably according to the present invention, the additional emergency communication corresponds to an advanced mobile location, AML, emergency communication or to an eCall emergency communication.

Preferably (according to both the first and the second group of embodiments), the additional emergency communication (initiated by the first device) is initiated subsequently to the emergency communication of the second device, and especially subsequently to the second device transmitting the at least one identifier information to the public safety answering point or to the private safety answering point.

The first device preferably transmits, as part of or during the additional emergency communication, its exact location to the public or private safety answering point or to the further public or further private safety answering point.

Especially the public or private safety answering point and/or the further public or further private safety answering point relates the emergency communication initiated by the second device and the additional emergency communication initiated by the first device to one another by means of the transmitted at least one identifier information.

Alternatively to additional emergency communication being triggered by the first device (i.e. the user equipment 25 in the first group of embodiments and the in-vehicle system 20 in the second group of embodiments) it is also possible and preferred according to the present invention that - in addition to the second device (i.e. the in-vehicle system 20 in the first group of embodiments and the user equipment 25 in the second group of embodiments) initiating, during the second step, the emergency communication to the public safety answering point or to the private safety answering point - the first device receives an additional emergency communication initiated by the public or private safety answering point (or by the further public or further private safety answering point). Hence, according to such a scenario, there is also the additional emergency communication (in addition to the emergency communication), however, the additional emergency communication is not initiated by the first device but by the public or private safety answering point or the further public or further private safety answering point. This is possible based on the at least one identifier information being transmitted to the public or private safety answering point during the second step.

Hence, according to the present invention, eCall is an automatic or manual emergency call system implemented in vehicles. In the event of an accident, a voice emergency call is triggered to the IVS (In Vehicle System) installed in the vehicle and transmits the exact location and other data relevant to the accident to the emergency services. Furthermore, AML (Advanced Mobile Location) is a system integrated into modern smartphones. In the event of an emergency, AML automatically determines the location of the caller (user equipment) and sends this information to the emergency call center. In addition to the phone number, the user equipment's location is also transmitted. This is done using location data that is determined either via the mobile network and/or via a GNSS application on the user equipment. AML enables emergency call centers to determine the exact location of the user equipment and send help there.
With an eCall, a connection is established between the IVS installed in the vehicle and the emergency control center.
With AML, a connection is established between the smartphone (passenger of a vehicle) and the emergency control center.
According to the present invention, it is advantageously possible to merge or to integrate eCall functionalities and the user equipments emergency calling capabilities (e.g., AML), but it is also advantageously possible to realize a "stand-alone eCall solution" where the IVS in the vehicle acts either as a "hotspot" or trigger the occupants' user equipments to setup an emergency session (e.G., AML) - i.e. the additional emergency communication besides the initially initiated emergency communication -, especially where the occupants' user equipments are linked - using the eCall group functionality - to the vehicle's IVS deploying the eCall connection of the in-vehicle system or triggers the occupants' user equipments to setup an emergency session (e.g., according to AML rules); alternatively, it is possible to transmits the MSISDNs / IMSI to the network, public or private safety answering point or call center which in turn sets up a connection - i.e. the additional emergency communication - to the user equipments of the occupants associated with that eCall.

According to the present invention, it is especially preferred that the following principles - at least in part - apply:
-- The user equipments (especially smart phones) are clearly assigned and coupled to the vehicle (dynamic) "eCall Group";
-- The IVS knows the subscription data of the user equipments (or smart phones) / occupants in the vehicle.
-- If an eCall is triggered, the IVS engages the user equipments of the occupants in the vehicle.
-- The network / PSAP correlates the data linked to the eCall (e.g. location / time) so that the calls are allotted to the eCall
-- Conversely, the location area (LA), as a geographically defined area in which the user equipments are located, can be used to correlate inversely with the eCall.

Regarding the coupling (and/or pairing) of the user equipment 25 with the in-vehicle system 20 (or vice versa), also regarding the compatibility between user equipments and in-vehicle system, especially the following, or, at least, part thereof applies:
-- Coupling between an IVS and a user equipment can be achieved by using technologies such as but not limited to Bluetooth, WLAN (wireless local area network, also calle Wifi), NFC (near-field communication), Apple CarPlay, Android Auto or even a wired connection, e.g. USB.
-- regarding compatibility between the user equipment and the in-vehicle system, it is especially relevant, for the function, that specific compatibility between the IVS and user equipment model is assured; in a first step, the IVS detects the type and software version of the user equipment that is to be coupled to the IVS. If a direct connection is possible, this is done; if the IVS and the UE cannot be paired directly, the IVS determines suitable data (e.g. IMEI and software version of the UE), and in the next step, the IVS loads software which enables the IVS to carry out and safeguards the coupling between IVs and UE from a server (network operator, call center, manufacturer of the UE, ...); then coupling (or pairing) between the user equipment and the in-vehicle system occurs;
-- alternatively or additionally, in-vehicle systems periodically receive software and firmware updates to its memory to ensure compatibility with new smartphone models and/or manufacturers (of in-vehicle systems and/or of user equipments) might have their products certified to ensure compatibility with specific smartphones or in-vehicle systems.

It is especially advantageous to ascertain that only qualified user equipments are linked to a specific vehicle, i.e. to a specific in-vehicle system, i.e. to ascertain that vehicle occupants are users of user equipments and these user equipments are part of a new "eCall group" that is created dynamically and relates to the vehicle for the duration of a trip, the occupants' user equipments are unambiguously connected to that specific vehicle (e.g. car modem/in-vehicle system).
This especially involves the establishment of the eCall Group: The establishment of an eCall Group is triggered by events like switching on the ignition of the vehicle or a start event indicating that the vehicle will / is been used for a ride. This may include the preparations of a navigation system or other appropriate means that are indicating to the in-vehicle system that the vehicle is intended to be on the move.
The "eCall group" can be saved either directly to the in-vehicle system or indirectly (external server - e.g. from the car manufacturer / emergency call control center). This eCall group data can be sent to the emergency call center/commercial call center, e.g. by FSD, MSD extension. Alternatively, by querying data from an external server. Optionally the in-vehicle system may be configured so that the vehicle only moves, when at least the driver has registered / connected his user equipment to the eCall group. This may switched-off, or be extended to all user equipments that are related to the vehicle. The connection between user equipments and in-vehicle system can be triggered manually or automatically (e.g. according to location information such as - 3gpp-Z, GPS.-UE register or proximity such as NFC).
A manual authentication might be done by entering a PIN code or by using a fingerprint sensor or facial recognition or other mechanisms assuring unambiguous authentication of the UE, passenger or (dangerous) good in the vehicle.
An automatic registration / pre-defined user group might alternatively or cumulatively be used; in this respect, user profiles can be created and stored on the in-vehicle system, which connects the user equipment to the in-vehicle system; this requires prior authentication and optionally by giving consent to be included to the "eCall group". Interruptions or stops during a ride might advantageously and preferably be handled as follows: in the case that the ride is interrupted (e.g. energy filling for the vehicle / loading or unloading /social break / pick up of new passengers or release of passengers) the in-vehicle system may be configured so that the vehicle only continues to be driven afterwards, when the occupants / goods have (re)registered / connected or de-registered to/from the eCall group. This may be extended to all user equipments that are registered to the in-vehicle system or only to a part thereof.
The dissolution of an eCall group might be triggered by events like switching off the ignition of the vehicle or an event indicating that the vehicle has finished the trip. This may include an indication from of a navigation system or GNSS.

In the event that an eCall is triggered, especially the following alternatives (or part thereof) apply:
-- The in-vehicle system establishes and maintains the connection between the user equipments and the in-vehicle system; the eCall in-vehicle system acts as a transmit in the communication between the rescue control center and the occupants and/or registered user equipments; in an emergency, user equipments can act as an "eCall device" and are enabled to communicate directly with the emergency call center or provide location data. The user equipments exchange location information or other vital data via the in-vehicle system to the public or private safety answering point (scenario of the in-vehicle system acting as transmit entity or device);
-- The in-vehicle system triggers the user equipments comprising the eCall group to establish a suitable connection. For example, a vehicle with an eCall system automatically triggers emergency call in the event of an accident and at the same time triggers the vehicle occupants' user equipments, which then use appropriate emergency techniques (e.g., AML) to establish a call and transmit their exact location (scenario of in-vehicle system triggered user equipments)
-- The in-vehicle system transmits the private or public subscription data of the user equipments / occupants; the network or other suitable entity in which the eCall was received establishes connections to the user equipments of the eCall group. (scenario of network or call center triggered user equipments).

Furthermore, it is preferred according to the present invention that the receiving public (or private) safety answering point / call center has knowledge of the eCall group and the associated identity. These data are sent by the in-vehicle system in case of an eCall (amended eCall MSD or eCall FSD). These data comprise new fields of passenger ecall passenger data, e.g. clear text names, driver license, gender, age, medical assistant information or the like.
The receiving agency public (or private) safety answering point / call center can request additional information, e.g. identities, numbers, etc.
The receiving agency public (or public) safety answering point / call center is preferably able to locate user equipments using appropriate means (e.g. AML location of user equipments belonging to the eCall group);
Optionally the in-vehicle system can send MSD data to the passengers user equipments via local radio technology.
Optionally, a data check might be applied to ascertain that user equipments of the eCall group location information (e.g. 3GPP cell info, GPS,...), and/or local radio technology connection and/or NFC technologies provide plausible data.
Furthermore, dynamic synchronization of data might be applied (location, passenger data, car information) between in-vehicle system, user equipments and optional 3rd party app server.
Preferably, all eCall-related data (i.e. car, passengers) and optional real time status can be exchanged via a 3^{rd} party data server (e.g. at car manufacturer or reg. authority or central PSAP).
Furthermore, data exchange via user plane level or via 3GPP signaling is advantageously possible and implemented according to the present invention.

## Claims

1. Method for conducting an emergency communication involving both an in-vehicle system (20) of a vehicle (50) and at least one user equipment (25) associated with the in-vehicle system (50), wherein the in-vehicle system (20) and the user equipment (25) are involved for conducting the emergency communication as a first and a second device, respectively, wherein the first device has or is assigned to at least one piece of identifier information, which corresponds to, or comprises, at least the vehicle identity number, wherein the first and second device are configured to be paired with one another and/or the first device to be registered with the second device in a manner such that the at least one piece of identifier information is transmitted to or, at least, stored in the second device, wherein, in order to conduct the emergency communication involving both the first and the second device (1, 2), the method comprises the following steps:
-- in a first step, the first device is paired with and/or registered to the second device resulting in storing the at least one piece of identifier information in the second device,
-- in a second step, subsequent to the first step, and in case of a situation resulting in the second device being triggered to perform an emergency communication to either a public safety answering point or to a private safety answering point, the at least one piece of identifier information of or associated or assigned to the first device is transmitted, by the second device and as part of the emergency communication, to the public safety answering point or to the private safety answering point.

2. Method according to claim 1, wherein the second device transmits, as part of the emergency communication, a minimal set of data to the public safety answering point or to the private safety answering point, wherein the at least one piece of identifier information is transmitted, by the second device, either as part of such minimum set of data or together with or subsequent to the transmission of the minimum set of data to the public safety answering point or to the private safety answering point,
wherein especially, by means of pairing the first and second device with one another and/or by means of registering the first device with or to the second device, the first and second device (1, 2) form an eCall group,
wherein especially the user equipment (25) is associated with an occupant of the vehicle (50),
wherein especially the eCall group comprises, in addition to the user equipment (25), a further user equipment, the further user equipment especially being associated to another occupant of the vehicle (50),
wherein especially the in-vehicle system (20) comprises or is associated with an identity module, and the user equipment (25) comprises a further identity module.

3. Method according to one of the preceding claims, wherein the first device is involved in the emergency communication that is initiated by the second device, during the second step, to the public safety answering point or to the private safety answering point, wherein especially the first device is locally involved in the emergency communication, wherein especially the second device establishes and maintains the emergency communication between the first device and the second device, and especially acts as a transmit in the emergency communication between, on the one hand, the public safety answering point or to the private safety answering point, and, on the other hand, the first device, wherein especially the first device is enabled to communicate directly with the public safety answering point or to the private safety answering point and exchanges information via the second device to the public safety answering point or to the private safety answering point.

4. Method according to one of the preceding claims, wherein - in addition to the second device initiating, during the second step, the emergency communication to the public safety answering point or to the private safety answering point - the first device is triggered, by the second device, to initiate an additional emergency communication to the public safety answering point or to the private safety answering point or to a further public or private safety answering point.

5. Method according to one of the preceding claims, wherein - in addition to the second device initiating, during the second step, the emergency communication to the public safety answering point or to the private safety answering point - the first device receives an additional emergency communication initiated by the public or private safety answering point or by the further public or private safety answering point.

6. Method according to one of the preceding claims, wherein the in-vehicle system (20) at least comprises an eCall module (51) and an in-vehicle-communication module or pairing module, wherein especially the in-vehicle system (20) also comprises a memory module (52), wherein the eCall module (51) is configured to be triggered, especially in case of an emergency situation, to initiate an emergency communication to either a public safety answering point or to a private safety answering point, wherein the in-vehicle-communication or pairing module is configured such as to pair the user equipment (25) to the in-vehicle system (20) or such as to register the user equipment (25) to the in-vehicle system (20), wherein especially, the in-vehicle system (20), especially the eCall module (51) thereof, comprises an identity module having a secure element, and wherein especially the user equipment (25) comprises a further identity module having a further secure element.

7. User equipment (25) for conducting an emergency communication involving both an in-vehicle system (20) of a vehicle (50) and at least the user equipment (25), wherein the in-vehicle system (20) and the user equipment (25) are involved for conducting the emergency communication as a first and a second device, respectively, wherein the first device has or is assigned to at least one piece of identifier information, which corresponds to, or comprises, at least the vehicle identity number, wherein the first and second device are configured to be paired with one another and/or the first device to be registered with the second device in a manner such that the at least one piece of identifier information is transmitted to or, at least, stored in the second device,
wherein, in order to conduct the emergency communication involving both the first and the second device, the user equipment (25) is configured such that:
-- the first device is paired with and/or registered to the second device resulting in storing the at least one piece of identifier information in the second device,
-- in case of a situation resulting in the second device being triggered to perform an emergency communication to either a public safety answering point or to a private safety answering point, the at least one piece of identifier information of or associated or assigned to the first device is transmitted, by the second device and as part of the emergency communication, to the public safety answering point or to the private safety answering point.

8. System comprising an in-vehicle system (20) of a vehicle (50) and at least one user equipment (25) for conducting an emergency communication involving both the in-vehicle system (20) and at least the user equipment (25) as a first and a second device, respectively, wherein the first device has or is assigned to at least one piece of identifier information, which corresponds to, or comprises, at least the vehicle identity number, wherein the first and second device are configured to be paired with one another and/or the first device to be registered with the second device in a manner such that the at least one piece of identifier information is transmitted to or, at least, stored in the second device,
wherein, in order to conduct the emergency communication involving both the first and the second device, the system is configured such that:
-- the first device is paired with and/or registered to the second device resulting in storing the at least one piece of identifier information in the second device,
-- in case of a situation resulting in the second device being triggered to perform an emergency communication to either a public safety answering point or to a private safety answering point, the at least one piece of identifier information of or associated or assigned to the first device is transmitted, by the second device and as part of the emergency communication, to the public safety answering point or to the private safety answering point.

9. Program comprising a computer readable program code which, when executed in part on an in-vehicle system (20) and in part on a user equipment (25), causes the in-vehicle system (20) and the user equipment (25) to perform a method according to one of claims 1 to 6.

10. Computer-readable medium comprising instructions which when executed in part on an in-vehicle system (20) and in part on a user equipment (25), causes the in-vehicle system (20) and the user equipment (25) to perform a method according to one of claims 1 to 6.

## Patentansprüche

1. Verfahren zum Durchführen einer Notrufkommunikation, an der sowohl ein Bordsystem (20) eines Fahrzeugs (50) als auch mindestens ein dem Bordsystem (50) zugeordnetes Benutzergerät (25) beteiligt sind, wobei das Bordsystem (20) und das Benutzergerät (25) zum Durchführen der Notrufkommunikation als erste bzw. zweite Vorrichtung beteiligt sind, wobei die erste Vorrichtung mindestens eine Kennungsinformation aufweist oder ihr zugeordnet ist, die zumindest der Fahrzeugidentifizierungsnummer entspricht oder diese umfasst, wobei die erste und die zweite Vorrichtung dazu eingerichtet sind, miteinander gekoppelt und/oder die erste Vorrichtung bei der zweiten Vorrichtung registriert zu werden, und zwar derart, dass die mindestens eine Kennungsinformation an die zweite Vorrichtung übertragen oder zumindest in dieser gespeichert wird, wobei das Verfahren zum Durchführen der Notrufkommunikation, an der sowohl die erste als auch die zweite Vorrichtung (1, 2) beteiligt sind, die folgenden Schritte umfasst:
-- in einem ersten Schritt wird die erste Vorrichtung mit der zweiten Vorrichtung gekoppelt und/oder bei dieser registriert, was zu einer Speicherung der mindestens einen Kennungsinformation in der zweiten Vorrichtung führt,
-- in einem zweiten Schritt, der auf den ersten Schritt folgt, wird in dem Fall, dass eine Situation vorliegt, die dazu führt, dass die zweite Vorrichtung ausgelöst wird, eine Notrufkommunikation entweder zu einer öffentlichen Notrufabfragestelle oder zu einer privaten Notrufabfragestelle durchzuführen, die mindestens eine der ersten Vorrichtung zugehörige, zugeordnete oder zugewiesene Kennungsinformation von der zweiten Vorrichtung und als Teil der Notrufkommunikation an die öffentliche Notrufabfragestelle oder an die private Notrufabfragestelle übertragen.

2. Verfahren nach Anspruch 1, wobei die zweite Vorrichtung als Teil der Notrufkommunikation einen Mindestdatensatz an die öffentliche Notrufabfragestelle oder an die private Notrufabfragestelle überträgt, wobei die mindestens eine Kennungsinformation von der zweiten Vorrichtung entweder als Teil dieses Mindestdatensatzes oder zusammen mit oder im Anschluss an die Übertragung des Mindestdatensatzes an die öffentliche Notrufabfragestelle oder an die private Notrufabfragestelle übertragen wird,
wobei insbesondere die erste und die zweite Vorrichtung (1, 2) durch das Koppeln der ersten und der zweiten Vorrichtung miteinander und/oder durch das Registrieren der ersten Vorrichtung bei der zweiten Vorrichtung eine eCall-Gruppe bilden,
wobei insbesondere das Benutzergerät (25) einem Insassen des Fahrzeugs (50) zugeordnet ist,
wobei insbesondere die eCall-Gruppe zusätzlich zu dem Benutzergerät (25) ein weiteres Benutzergerät umfasst, wobei das weitere Benutzergerät insbesondere einem weiteren Insassen des Fahrzeugs (50) zugeordnet ist,
wobei insbesondere das Bordsystem (20) ein Identitätsmodul umfasst oder diesem zugeordnet ist, und das Benutzergerät (25) ein weiteres Identitätsmodul umfasst.

3. Verfahren nach einem der vorhergehenden Ansprüche, wobei die erste Vorrichtung an der Notrufkommunikation beteiligt ist, die während des zweiten Schritts von der zweiten Vorrichtung zu der öffentlichen Notrufabfragestelle oder zu der privaten Notrufabfragestelle eingeleitet wird, wobei insbesondere die erste Vorrichtung örtlich an der Notrufkommunikation beteiligt ist, wobei insbesondere die zweite Vorrichtung die Notrufkommunikation zwischen der ersten Vorrichtung und der zweiten Vorrichtung aufbaut und aufrechterhält und insbesondere als Übermittler in der Notrufkommunikation zwischen einerseits der öffentlichen Notrufabfragestelle oder der privaten Notrufabfragestelle und andererseits der ersten Vorrichtung fungiert, wobei insbesondere die erste Vorrichtung dazu befähigt ist, direkt mit der öffentlichen Notrufabfragestelle oder der privaten Notrufabfragestelle zu kommunizieren, und Informationen über die zweite Vorrichtung an die öffentliche Notrufabfragestelle oder an die private Notrufabfragestelle austauscht.

4. Verfahren nach einem der vorhergehenden Ansprüche, wobei -- zusätzlich dazu, dass die zweite Vorrichtung während des zweiten Schritts die Notrufkommunikation zu der öffentlichen Notrufabfragestelle oder zu der privaten Notrufabfragestelle einleitet -- die erste Vorrichtung von der zweiten Vorrichtung ausgelöst wird, eine zusätzliche Notrufkommunikation zu der öffentlichen Notrufabfragestelle oder zu der privaten Notrufabfragestelle oder zu einer weiteren öffentlichen oder privaten Notrufabfragestelle einzuleiten.

5. Verfahren nach einem der vorhergehenden Ansprüche, wobei -- zusätzlich dazu, dass die zweite Vorrichtung während des zweiten Schritts die Notrufkommunikation zu der öffentlichen Notrufabfragestelle oder zu der privaten Notrufabfragestelle einleitet -- die erste Vorrichtung eine zusätzliche Notrufkommunikation empfängt, die von der öffentlichen oder privaten Notrufabfragestelle oder von der weiteren öffentlichen oder privaten Notrufabfragestelle eingeleitet wird.

6. Verfahren nach einem der vorhergehenden Ansprüche, wobei das Bordsystem (20) mindestens ein eCall-Modul (51) und ein Fahrzeugkommunikationsmodul oder Kopplungsmodul umfasst, wobei das Bordsystem (20) insbesondere auch ein Speichermodul (52) umfasst, wobei das eCall-Modul (51) dazu eingerichtet ist, insbesondere im Falle einer Notfallsituation ausgelöst zu werden, um eine Notrufkommunikation entweder zu einer öffentlichen Notrufabfragestelle oder zu einer privaten Notrufabfragestelle einzuleiten, wobei das Fahrzeugkommunikations- oder Kopplungsmodul dazu eingerichtet ist, das Benutzergerät (25) mit dem Bordsystem (20) zu koppeln oder das Benutzergerät (25) bei dem Bordsystem (20) zu registrieren, wobei insbesondere das Bordsystem (20), insbesondere dessen eCall-Modul (51), ein Identitätsmodul mit einem sicheren Element umfasst, und wobei insbesondere das Benutzergerät (25) ein weiteres Identitätsmodul mit einem weiteren sicheren Element umfasst.

7. Benutzergerät (25) zum Durchführen einer Notrufkommunikation, an der sowohl ein Bordsystem (20) eines Fahrzeugs (50) als auch mindestens das Benutzergerät (25) beteiligt sind, wobei das Bordsystem (20) und das Benutzergerät (25) zum Durchführen der Notrufkommunikation als erste bzw. zweite Vorrichtung beteiligt sind, wobei die erste Vorrichtung mindestens eine Kennungsinformation aufweist oder ihr zugeordnet ist, die zumindest der Fahrzeugidentifizierungsnummer entspricht oder diese umfasst, wobei die erste und die zweite Vorrichtung dazu eingerichtet sind, miteinander gekoppelt und/oder die erste Vorrichtung bei der zweiten Vorrichtung registriert zu werden, und zwar derart, dass die mindestens eine Kennungsinformation an die zweite Vorrichtung übertragen oder zumindest in dieser gespeichert wird,
wobei das Benutzergerät (25) zum Durchführen der Notrufkommunikation, an der sowohl die erste als auch die zweite Vorrichtung beteiligt sind, derart eingerichtet ist, dass:
-- die erste Vorrichtung mit der zweiten Vorrichtung gekoppelt und/oder bei dieser registriert wird, was zu einer Speicherung der mindestens einen Kennungsinformation in der zweiten Vorrichtung führt,
-- in dem Fall, dass eine Situation vorliegt, die dazu führt, dass die zweite Vorrichtung ausgelöst wird, eine Notrufkommunikation entweder zu einer öffentlichen Notrufabfragestelle oder zu einer privaten Notrufabfragestelle durchzuführen, die mindestens eine der ersten Vorrichtung zugehörige, zugeordnete oder zugewiesene Kennungsinformation von der zweiten Vorrichtung und als Teil der Notrufkommunikation an die öffentliche Notrufabfragestelle oder an die private Notrufabfragestelle übertragen wird.

8. System, umfassend ein Bordsystem (20) eines Fahrzeugs (50) und mindestens ein Benutzergerät (25) zum Durchführen einer Notrufkommunikation, an der sowohl das Bordsystem (20) als auch mindestens das Benutzergerät (25) als erste bzw. zweite Vorrichtung beteiligt sind, wobei die erste Vorrichtung mindestens eine Kennungsinformation aufweist oder ihr zugeordnet ist, die zumindest der Fahrzeugidentifizierungsnummer entspricht oder diese umfasst, wobei die erste und die zweite Vorrichtung dazu eingerichtet sind, miteinander gekoppelt und/oder die erste Vorrichtung bei der zweiten Vorrichtung registriert zu werden, und zwar derart, dass die mindestens eine Kennungsinformation an die zweite Vorrichtung übertragen oder zumindest in dieser gespeichert wird,
wobei das System zum Durchführen der Notrufkommunikation, an der sowohl die erste als auch die zweite Vorrichtung beteiligt sind, derart eingerichtet ist, dass:
-- die erste Vorrichtung mit der zweiten Vorrichtung gekoppelt und/oder bei dieser registriert wird, was zu einer Speicherung der mindestens einen Kennungsinformation in der zweiten Vorrichtung führt,
-- in dem Fall, dass eine Situation vorliegt, die dazu führt, dass die zweite Vorrichtung ausgelöst wird, eine Notrufkommunikation entweder zu einer öffentlichen Notrufabfragestelle oder zu einer privaten Notrufabfragestelle durchzuführen, die mindestens eine der ersten Vorrichtung zugehörige, zugeordnete oder zugewiesene Kennungsinformation von der zweiten Vorrichtung und als Teil der Notrufkommunikation an die öffentliche Notrufabfragestelle oder an die private Notrufabfragestelle übertragen wird.

9. Programm, umfassend einen computerlesbaren Programmcode, der, wenn er teilweise auf einem Bordsystem (20) und teilweise auf einem Benutzergerät (25) ausgeführt wird, das Bordsystem (20) und das Benutzergerät (25) veranlasst, ein Verfahren nach einem der Ansprüche 1 bis 6 durchzuführen.

10. Computerlesbares Medium, umfassend Anweisungen, die, wenn sie teilweise auf einem Bordsystem (20) und teilweise auf einem Benutzergerät (25) ausgeführt werden, das Bordsystem (20) und das Benutzergerät (25) veranlassen, ein Verfahren nach einem der Ansprüche 1 bis 6 durchzuführen.

## Revendications

1. Procédé de réalisation d'une communication d'urgence impliquant à la fois un système embarqué (20) d'un véhicule (50) et au moins un équipement utilisateur (25) associé au système embarqué (50), dans lequel le système embarqué (20) et l'équipement utilisateur (25) sont impliqués dans la réalisation de la communication d'urgence en tant que premier et second dispositifs, respectivement, dans lequel le premier dispositif comporte ou se voit attribuer au moins une information d'identification, qui correspond au moins au numéro d'identification du véhicule ou le comprend, dans lequel les premier et second dispositifs sont configurés pour être appairés l'un avec l'autre et/ou le premier dispositif pour être enregistré auprès du second dispositif, de manière à ce que l'au moins une information d'identification soit transmise au second dispositif ou, au moins, stockée dans celui-ci,
dans lequel, afin de réaliser la communication d'urgence impliquant à la fois le premier et le second dispositif (1, 2), le procédé comprend les étapes suivantes :
-- dans une première étape, le premier dispositif est appairé avec le second dispositif et/ou enregistré auprès de celui-ci, ce qui entraîne le stockage de l'au moins une information d'identification dans le second dispositif,
-- dans une seconde étape, consécutive à la première étape, et dans le cas d'une situation entraînant le déclenchement du second dispositif pour réaliser une communication d'urgence soit vers un point de réception des appels d'urgence public, soit vers un point de réception des appels d'urgence privé, l'au moins une information d'identification appartenant au premier dispositif ou associée ou attribuée à celui-ci est transmise, par le second dispositif et dans le cadre de la communication d'urgence, au point de réception des appels d'urgence public ou au point de réception des appels d'urgence privé.

2. Procédé selon la revendication 1, dans lequel le second dispositif transmet, dans le cadre de la communication d'urgence, un ensemble minimal de données au point de réception des appels d'urgence public ou au point de réception des appels d'urgence privé, dans lequel l'au moins une information d'identification est transmise, par le second dispositif, soit dans le cadre de cet ensemble minimal de données, soit conjointement avec ou consécutivement à la transmission de l'ensemble minimal de données au point de réception des appels d'urgence public ou au point de réception des appels d'urgence privé,
dans lequel, notamment, au moyen de l'appairage du premier et du second dispositif l'un avec l'autre et/ou au moyen de l'enregistrement du premier dispositif auprès du second dispositif, les premier et second dispositifs (1, 2) forment un groupe eCall,
dans lequel, notamment, l'équipement utilisateur (25) est associé à un occupant du véhicule (50),
dans lequel, notamment, le groupe eCall comprend, en plus de l'équipement utilisateur (25), un autre équipement utilisateur, cet autre équipement utilisateur étant notamment associé à un autre occupant du véhicule (50),
dans lequel, notamment, le système embarqué (20) comprend ou est associé à un module d'identité, et l'équipement utilisateur (25) comprend un autre module d'identité.

3. Procédé selon l'une des revendications précédentes, dans lequel le premier dispositif est impliqué dans la communication d'urgence qui est initiée par le second dispositif, au cours de la seconde étape, vers le point de réception des appels d'urgence public ou vers le point de réception des appels d'urgence privé, dans lequel, notamment, le premier dispositif est impliqué localement dans la communication d'urgence, dans lequel, notamment, le second dispositif établit et maintient la communication d'urgence entre le premier dispositif et le second dispositif, et agit notamment comme relais dans la communication d'urgence entre, d'une part, le point de réception des appels d'urgence public ou le point de réception des appels d'urgence privé, et, d'autre part, le premier dispositif, dans lequel, notamment, le premier dispositif est apte à communiquer directement avec le point de réception des appels d'urgence public ou le point de réception des appels d'urgence privé et échange des informations par l'intermédiaire du second dispositif vers le point de réception des appels d'urgence public ou vers le point de réception des appels d'urgence privé.

4. Procédé selon l'une des revendications précédentes, dans lequel -- en plus du fait que le second dispositif initie, au cours de la seconde étape, la communication d'urgence vers le point de réception des appels d'urgence public ou vers le point de réception des appels d'urgence privé -- le premier dispositif est déclenché, par le second dispositif, pour initier une communication d'urgence supplémentaire vers le point de réception des appels d'urgence public ou vers le point de réception des appels d'urgence privé ou vers un autre point de réception des appels d'urgence public ou privé.

5. Procédé selon l'une des revendications précédentes, dans lequel -- en plus du fait que le second dispositif initie, au cours de la seconde étape, la communication d'urgence vers le point de réception des appels d'urgence public ou vers le point de réception des appels d'urgence privé -- le premier dispositif reçoit une communication d'urgence supplémentaire initiée par le point de réception des appels d'urgence public ou privé ou par l'autre point de réception des appels d'urgence public ou privé.

6. Procédé selon l'une des revendications précédentes, dans lequel le système embarqué (20) comprend au moins un module eCall (51) et un module de communication embarquée ou module d'appairage, dans lequel, notamment, le système embarqué (20) comprend également un module de mémoire (52), dans lequel le module eCall (51) est configuré pour être déclenché, notamment en cas de situation d'urgence, afin d'initier une communication d'urgence soit vers un point de réception des appels d'urgence public, soit vers un point de réception des appels d'urgence privé, dans lequel le module de communication embarquée ou d'appairage est configuré de manière à appairer l'équipement utilisateur (25) avec le système embarqué (20) ou de manière à enregistrer l'équipement utilisateur (25) auprès du système embarqué (20), dans lequel, notamment, le système embarqué (20), notamment son module eCall (51), comprend un module d'identité comportant un élément sécurisé, et dans lequel, notamment, l'équipement utilisateur (25) comprend un autre module d'identité comportant un autre élément sécurisé.

7. Équipement utilisateur (25) pour la réalisation d'une communication d'urgence impliquant à la fois un système embarqué (20) d'un véhicule (50) et au moins l'équipement utilisateur (25), dans lequel le système embarqué (20) et l'équipement utilisateur (25) sont impliqués dans la réalisation de la communication d'urgence en tant que premier et second dispositifs, respectivement, dans lequel le premier dispositif comporte ou se voit attribuer au moins une information d'identification, qui correspond au moins au numéro d'identification du véhicule ou le comprend, dans lequel les premier et second dispositifs sont configurés pour être appairés l'un avec l'autre et/ou le premier dispositif pour être enregistré auprès du second dispositif, de manière à ce que l'au moins une information d'identification soit transmise au second dispositif ou, au moins, stockée dans celui-ci,
dans lequel, afin de réaliser la communication d'urgence impliquant à la fois le premier et le second dispositif, l'équipement utilisateur (25) est configuré de sorte que :
-- le premier dispositif soit appairé avec le second dispositif et/ou enregistré auprès de celui-ci, ce qui entraîne le stockage de l'au moins une information d'identification dans le second dispositif,
-- dans le cas d'une situation entraînant le déclenchement du second dispositif pour réaliser une communication d'urgence soit vers un point de réception des appels d'urgence public, soit vers un point de réception des appels d'urgence privé, l'au moins une information d'identification appartenant au premier dispositif ou associée ou attribuée à celui-ci soit transmise, par le second dispositif et dans le cadre de la communication d'urgence, au point de réception des appels d'urgence public ou au point de réception des appels d'urgence privé.

8. Système comprenant un système embarqué (20) d'un véhicule (50) et au moins un équipement utilisateur (25) pour la réalisation d'une communication d'urgence impliquant à la fois le système embarqué (20) et au moins l'équipement utilisateur (25) en tant que premier et second dispositifs, respectivement, dans lequel le premier dispositif comporte ou se voit attribuer au moins une information d'identification, qui correspond au moins au numéro d'identification du véhicule ou le comprend, dans lequel les premier et second dispositifs sont configurés pour être appairés l'un avec l'autre et/ou le premier dispositif pour être enregistré auprès du second dispositif, de manière à ce que l'au moins une information d'identification soit transmise au second dispositif ou, au moins, stockée dans celui-ci,
dans lequel, afin de réaliser la communication d'urgence impliquant à la fois le premier et le second dispositif, le système est configuré de sorte que :
-- le premier dispositif soit appairé avec le second dispositif et/ou enregistré auprès de celui-ci, ce qui entraîne le stockage de l'au moins une information d'identification dans le second dispositif,
-- dans le cas d'une situation entraînant le déclenchement du second dispositif pour réaliser une communication d'urgence soit vers un point de réception des appels d'urgence public, soit vers un point de réception des appels d'urgence privé, l'au moins une information d'identification appartenant au premier dispositif ou associée ou attribuée à celui-ci soit transmise, par le second dispositif et dans le cadre de la communication d'urgence, au point de réception des appels d'urgence public ou au point de réception des appels d'urgence privé.

9. Programme comprenant un code de programme lisible par ordinateur qui, lorsqu'il est exécuté en partie sur un système embarqué (20) et en partie sur un équipement utilisateur (25), amène le système embarqué (20) et l'équipement utilisateur (25) à mettre en œuvre un procédé selon l'une des revendications 1 à 6.

10. Support lisible par ordinateur comprenant des instructions qui, lorsqu'elles sont exécutées en partie sur un système embarqué (20) et en partie sur un équipement utilisateur (25), amènent le système embarqué (20) et l'équipement utilisateur (25) à mettre en œuvre un procédé selon l'une des revendications 1 à 6.
